# EUROPEAN PATENT SPECIFICATION

(11) **EP 1 395 350 B1**
(45) Date of publication and mention of the grant of the patent: **11.05.2005**
(21) Application number: 02726293.0
(22) Date of filing: 15.05.2002
(51) Int. Cl.: B01D 53/86, B01D 53/88, B01D 53/94, B01D 53/74

(54) **Coated heat exchanger for reducing atmospheric oxidising pollutants**
Beschichteter Wärmetauscher zur Verminderung von oxidierenden atmosphärischen Schadstoffen
Echangeur de chaleur muni d'un revêtement pour réduire les composés oxydants dans l'atmosphère

(30) Priority: 15.05.2001 GB 0111733
(43) Date of publication of application: 10.03.2004
(73) Proprietor: JOHNSON MATTHEY PUBLIC LIMITED COMPANY, London SW1Y 5BQ (GB)
(72) Inventor: MORGAN, Christopher, Royston SG8 9EF (GB)
(74) Representative: Nunn, Andrew Dominic
(86) International application number: PCT/GB2002/002141
(87) International publication number: WO 2002/092194

(56) References cited:
- EP-A- 0 210 681
- EP-A- 0 387 044
- EP-A- 0 398 765
- EP-A- 0 779 093
- WO-A-90/11433
- WO-A-95/33560
- WO-A-96/22146
- DE-A- 19 826 209
- DE-B- 1 161 869
- FR-A- 2 747 320
- GB-A- 1 522 389
- US-A- 5 698 165
- US-A- 5 888 924
- US-A- 5 945 080

## Description

The present invention relates to compositions for reducing atmospheric oxidising pollutants, such as ozone (O₃) and nitrogen dioxide (NO₂), and in particular to compositions for coating surfaces for contacting the atmosphere.

By "atmospheric oxidising pollutant" herein, we mean an atmospheric pollutant that has the potential to oxidise other atmospheric pollutants in a redox reaction. Examples of atmospheric oxidising pollutants include O₃, NO₂, dinitrogen tertroxide (N₂O₄) and sulfur trioxide (SO₃).

Ground-level O₃, a component of smog, is created from the reaction of nitrogen oxides (NOₓ) and hydrocarbons (HC), from vehicle and industrial emissions. Aldehydes, organic species having a relatively high Maximum Incremental Reactivity adjustment factor (MIR) also known as carter factors (as defined by "Californian Non-methane organic gases test procedures", The California Environmental Protection Agency Air Resource Board dated August 5, 1999), are also produced. Part of this reaction is catalysed by sunlight and can be represented by two equations:
(i) O₂ + RCH₂CH₃ + NO → RCH₂CHO + NO₂; and
(ii) NO₂ + O₂ →^{*hv*} O₃ + NO.
Smog can cause asthma and respiratory ailments and is a particular problem in the southern California basin, Los Angeles and Houston, Texas in the USA.

In WO 96/22146, Engelhard describes the concept of coating an atmosphere-contacting surface of a vehicle with a composition for treating one or more atmospheric pollutant, such as O₃ alone, O₃ and carbon monoxide (CO) or O₃, CO and HC. The surface is preferably that of a heat exchanger, such as a radiator or air conditioner condenser, located within the vehicle's engine compartment. As the vehicle is propelled through the atmosphere, pollutants suspended in the atmosphere contact the composition and, depending on the formulation of the composition, it catalyses the reduction of the atmospheric oxidising pollutant O₃ to oxygen, and/or the oxidation of the atmospheric reducing pollutant carbon monoxide to carbon dioxide and/or of HC to water and carbon dioxide.

Engelhard markets a vehicle radiator having a catalytic coating for reducing O₃ under the trade name PremAir®. Details of PremAir® can also be found on Engelhard's website. It is also described in its WO 96/22146. We understand that the active material on the marketed radiators is a manganese-based component, cryptomelane (KMn₈O₁₆.xH₂O, structurally related to α-MnO₂). Coated radiators have been fitted on certain Volvo production passenger vehicles, e.g. the S80 luxury sedan in USA and throughout Europe.

Catalytically coated heat exchangers are also used for treating aeroplane cabin air and for reducing O₃ emissions from computer printers, photocopiers etc.

Modern heat exchangers for use in vehicles are made from aluminium or aluminium alloys and are manufactured by companies such as Visteon, Delphi and Valeo. Heat exchangers for non-vehicle applications can also be made from aluminium or aluminium alloys. Hereinafter "aluminium" will be used to refer to aluminium and alloys of aluminium.

Modern radiators comprise a radiator core typically of aluminium, which core including fins or plates extending from the outer surface of a housing or conduit for carrying a fluid to be cooled. To this core is fitted one or more plastic tanks which carry the fluid to and from the radiator core. In the process for manufacturing PremAir® coated radiators, it is understood that the temperatures required to cure the catalyst composition applied to the radiator core are sufficient to heat damage plastic tanks. Accordingly, in the process used in practice, the coated radiator cores are prepared in a separate step before the plastic tanks are fitted thereto.

It would be a considerable advantage in the manufacture of coated heat exchangers to be able to cure the reducing agent composition at temperatures below which plastic components, such as plastic tanks for radiators, suffer heat damage. For example, this would avoid a number of steps of the manufacturing process used by Engelhard in making PremAir® coated radiators, thus saving energy in the curing process and making the process as a whole more time and cost efficient.

As will be appreciated by the person skilled in the art, the formulation of a composition suitable for application of a reducing agent to a surface is complex. In addition to the active reducing agent component, the formulation can include one or more binder (including thermosetting or thermoplastic polymeric binders), stabiliser, age resistor, dispersant, plasticiser, flow improver, water resistance agent or adhesion, improvement agent. The binder provides cohesion to the composition. Furthermore, it provides adhesion of the "wet" composition to a substrate following application, and once cured, it provides adhesion and mechanical robustness to the coating to prevent it flaking after prolonged thermal cycling, and the ability to withstand knocks and bumps.

Among the factors that the skilled formulator will consider in formulating a composition including a reducing agent for coating, e.g. an aluminium alloy radiator, are the solvent medium and its compatibility with the other components and how the composition is to be used. For example, how does the composition handle, flow or mix? Will the composition separate or settle on standing? Does the formulation diminish the activity of the reducing agent, for example by preventing air accessing the component, by chemical reaction with the solvent or any other component in the formulation or does the curing process thermally deactivate the reducing agent? Is the composition suitable for the chosen mode of application, e.g. spray coating, electrostatic spray coating or screen-printing? Does the cured formulation have the required physical properties?

It can be seen, therefore, that the problem of developing a composition that cures at lower temperatures cannot be solved merely by exchanging the solvent of a known composition for one with a lower boiling point.

In WO 96/22146 Engelhard describe a number of polymeric binder components for use in the catalyst compositions described therein. The preferred polymers and copolymer binders are vinyl acrylic polymers and ethylene vinyl acetate copolymers. Cellulosic polymers are also mentioned but none of the Examples exemplify a composition including a cellulosic binder.

We have now found that, very surprisingly, water soluble binders are particularly suited to compositions for coating atmosphere contacting surfaces, which compositions include, as an active component, the catalysts described in WO 96/22146, particularly manganese-based catalysts such as MnO₂ and derivatives thereof, particularly cryptomelane. This observation provides a number of very useful advantages.

By "atmospheric reducing pollutant" herein we mean an atmospheric pollutant that has the potential to reduce other atmospheric pollutants in a redox reaction. Non-limiting examples of atmospheric reducing pollutants are hydrocarbons including aliphatic hydrocarbons, e.g. alkanes, and cyclic hydrocarbons; paraffins; olefins, alkenes and alkynes; dialkenes including conjugated unsaturated hydrocarbons; carboxylic, peroxy or sulfonic acids; partially oxygenated hydrocarbons including aldehydes, conjugated aldehydes, ketones, ethers, alcohols and esters; amides; ammonium compounds; aromatic hydrocarbons and cycloparaffins; any of the above including one or more nitrogen-, sulfur-, oxygen- or phosphorus-atoms; CO; sulphur dioxide and soot or particulate matter components exhausted from, e.g. a power plant (as defined hereinbelow).

According to one aspect, the invention provides a heat exchanger comprising an atmosphere-contacting surface coated with a composition for reducing atmospheric oxidising pollutants, which composition comprises a reducing agent comprising a manganese-based catalyst and a binder characterised in that the binder is water soluble.

An important advantage of the present invention is that the composition can be cured at relatively low temperatures, e.g. ≤90°C, compared with compositions including Engelhard's preferred binders. In particular, this feature enables the preparation of a radiator core fitted with its plastic tanks in a continuous process, i.e. without having first to prepare a coated core and then fit the plastic tanks thereto. In contrast with compositions requiring higher curing temperatures, the coated radiator core must be prepared before assembling the tanks to prevent heat damage of the tanks during curing. Thus, not only is there an economic advantage in that the energy required to cure the composition is reduced, but the process of radiator manufacture is simplified.

The composition according to the invention can be applied to a surface with known technology such as by spraying using a compressed air spray gun, by an electrostatic application process or using a screen printing process. Furthermore, the cured composition has acceptable physical properties as displayed by scrape, wipe, ultrasonic and SWAAT tests. In particular, no deterioration was seen following thermal cycling and the cured composition does not hydrate when contacted with aqueous media or flake or chip.

In one preferred embodiment, the water-soluble binder is a cellulosic binder. The cellulosic binder can be an ether or ester or semi-synthetic cellulosic binder, but is preferably hydroxypropyl- or methylcellulose.

In another preferred embodiment, the water-soluble binder is a vinyl or acrylic binder, preferably polyvinyl alcohol or ammonium polymethacrylate.

According to a further aspect, the invention provides a method of making a heat exchanger according to the invention comprising the steps of coating the surface with a composition comprising a manganese-based catalyst and a water soluble binder and heating the coated surface for a sufficient time to cure the composition, wherein the heating step consists of heating the coated surface to ≤90°C.

The heat exchanger can be associated with a means for causing movement of the surface relative to the atmosphere.

The means for causing movement of the heat exchanger relative to the atmosphere can be a power plant. The power plant can be an engine fuelled by gasoline, diesel, liquid petroleum gas, natural gas, methanol, ethanol, methane or a mixture of any two or more thereof, an electric cell, a solar cell or a hydrocarbon or hydrogen-powered fuel cell.

Preferably the heat exchanger is on or in a vehicle, and the movement-causing means is a power plant as described above. The vehicle can be a car, van, truck, bus, lorry, aeroplane, boat, ship, airship or train, for example. A particularly preferred application is for use in heavy-duty diesel vehicles, i.e. vans, trucks, buses or lorries, as defined by the relevant European legislation.

The heat exchanger can be a radiator, an air conditioner condenser, an air charge cooler (intercooler or aftercooler), an engine oil cooler, a transmission oil cooler or a power steering oil cooler. An advantage of the invention is that the heat exchanger reaches above ambient temperatures, such as up to 140°C, e.g. 40°C to 110°C, at which, for example, O₃ reduction can occur more favourably. A further advantage is that in order to transfer heat efficiently heat exchangers have a relatively large surface area comprising fins or plates extending from the outer surface of a housing or conduit for carrying a fluid to be cooled. Accordingly, heat exchangers provide a greater level of contact between the composition and the atmosphere.

By "ambient" herein we mean the temperature and conditions, e.g. humidity, of the atmosphere.

In a particularly preferred embodiment, the apparatus comprises a radiator and/or air conditioning condenser which is housed within a compartment of a vehicle also including the power plant, e.g. an air-cooled engine. This provides the advantage that the radiator and/or condenser is exposed to ambient atmospheric air as the vehicle is propelled through the atmosphere whilst being protected by the radiator grill from damage by particulates, e.g. grit or stones, and from the impact of flies. For mid- and rear-engine vehicles, air intakes and conduits can be arranged to carry atmospheric air to and from the supported reducing agent. A further advantage of locating the radiator and/or condenser in the engine compartment is that exposure to corrosion-causing agents such as moist air, salt and/or grit is reduced and hence so too is the rate of any corrosion. Whilst the radiator and/or condenser can be formed of any material, it is usually a metal or an alloy. Most preferably, the heat exchanger is aluminium or an alloy containing aluminium.

It is important that the composition coating the surface does not reduce the effectiveness of the heat exchanger to transfer heat. Accordingly, in one preferred feature, the composition of the invention can include particles of a transition metal, preferably silver or copper, for improving the thermal conductivity of the composition.

Another advantage of using a heat exchanger, such as a radiator, as the support surface for the reducing agent is that the radiator is releasably attached to a vehicle, typically in the engine compartment of the vehicle. This enables coated radiators and other heat exchangers to be retrofitted to the vehicle, e.g. during normal servicing of the vehicle, thereby to improve the pollutant treating ability of the vehicle.

In order that the invention may be more fully understood, the invention will now be described by reference to the following illustrative Examples.

### EXAMPLE 1

To screen candidate O₃ reducing agents at room temperature, a test rig comprising an upstream O₃ generator, a stainless steel tube including metal mesh to pack a reactor bed material therebetween and a downstream O₃ detector was set up in a fume cupboard. O₃ was generated and mixed with air before passing through the reactor bed containing powder or pellet samples. The exhaust gas from the reactor bed was passed through the O₃ detector (measured in 5 ppm units) before being vented. An inlet O₃ concentration of ∼200 ppm at a space velocity (GHSV) of ∼1000/hr was used. Whilst higher space velocities would be observed at, e.g. the surface of a radiator, and atmospheric O₃ concentrations are present in the parts per billion range, the results were useful to compare directly the potential of each material tested to reduce O₃.

### EXAMPLE 2

There is now described a composition which is not according to the invention including the Cu/ZnO//Al₂O₃ reducing agent component for application to e.g. an aluminium alloy radiator substrate.

Cu/ZnO//Al₂O₃ was mixed with an aqueous solution of hydroxypropyl cellulose binder, Klucel™, to a concentration of 10% wt/wt. The coating was applied to each side of a Visteon aluminium alloy radiator of 20mm thickness using a compressed air spray gun and then cured at or below 90 °C.

### EXAMPLE 3

There is now described a composition which is not according to the invention including a beta zeolite trap component for application to an aluminium radiator substrate.

Beta zeolite was mixed with an aqueous solution of hydroxypropyl cellulose binder, Klucel™, to a concentration of 10% wt/wt. The coating was applied to each side of a Visteon aluminium radiator of 20mm thickness using a compressed air spray gun and then cured at up to 90 °C.

## Claims

1. A heat exchanger comprising an atmosphere-contacting surface coated with a composition for reducing atmospheric oxidising pollutants, which composition comprises a reducing agent comprising a manganese-based catalyst and a binder **characterised in that** the binder is water soluble.

2. A heat exchanger according to claim 1, wherein the manganese-based catalyst is MnO₂ or a derivative thereof.

3. A heat exchanger according to claim 2, wherein the MnO₂ derivative is cryptomelane.

4. A heat exchanger according to claim 1, 2 or 3, wherein the water-soluble binder is a cellulosic binder.

5. A heat exchanger according to claim 4, wherein the cellulosic binder is an ether or ester or semi-synthetic cellulosic binder, preferably hydroxypropyl- or methylcellulose.

6. A heat exchanger according to claim 1, 2 or 3, wherein the water soluble binder is a vinyl or acrylic binder, preferably polyvinyl alcohol or ammonium polymethacrylate.

7. A heat exchanger according to any preceding claim, further including particles of a transition metal, preferably silver or copper, for improving the thermal conductivity of the composition.

8. A heat exchanger according to any preceding claim, wherein the surface comprises aluminium or an aluminium alloy.

9. A heat exchanger according to any preceding claim, wherein the heat exchanger is a radiator and/or a condenser, preferably for a motor vehicle.

10. A method of making a heat exchanger according to any preceding claim comprising the steps of coating the surface with a composition comprising a manganese-based catalyst and a water soluble binder and heating the coated surface for a sufficient time to cure the composition, wherein the heating step-consists of heating the coated surface to ≤90°C.

## Patentansprüche

1. Wärmeaustauscher, umfassend eine die Atmosphäre kontaktierende Oberfläche, die beschichtet ist mit einer Zusammensetzung zur Reduktion atmosphärischer oxidierender Schmutzstoffe, wobei die Zusammensetzung ein Reduktionsmittel umfasst, das einen auf Mangan basierenden Katalysator und ein Bindemittel umfasst, **dadurch gekennzeichnet, dass** das Bindemittel wasserlöslich ist.

2. Wärmeaustauscher nach Anspruch 1, worin der auf Mangan basierende Katalysator für MnO₂ oder ein Derivat davon steht.

3. Wärmeaustauscher nach Anspruch 2, worin das MnO₂ Derivat für Kryptomelan steht.

4. Wärmeaustauscher nach Anspruch 1, 2 oder 3, worin das wasserlösliche Bindemittel für ein cellulosehaltiges Bindemittel steht.

5. Wärmeaustauscher nach Anspruch 4, worin das cellulosehaltige Bindemittel für ein Ether- oder Esteroder semisynthetisches cellulosehaltiges Bindemittel, vorzugsweise Hydroxypropyl- oder Methylcellulose, steht.

6. Wärmeaustauscher nach Anspruch 1, 2 oder 3, worin das wasserlösliche Bindemittel für ein Vinyloder Acrylbindemittel, vorzugsweise Polyvinylalkohol oder Ammoniumpolymethacrylat, steht.

7. Wärmeaustauscher nach einem beliebigen vorstehenden Anspruch, der zusätzlich Teilchen von einem Übergangsmetall, vorzugsweise Silber oder Kupfer, zur Verbesserung der thermischen Leitfähigkeit der Zusammensetzung einschließt.

8. Wärmeaustauscher nach einem beliebigen vorstehenden Anspruch, worin die Oberfläche Aluminium oder eine Aluminiumlegierung umfasst.

9. Wärmeaustauscher nach einem beliebigen vorstehenden Anspruch, worin der Wärmeaustauscher für einen Motorkühler und/oder einen Kühler, vorzugsweise für ein Kraftfahrzeug, steht.

10. Verfahren zur Herstellung eines Wärmeaustauschers nach einem beliebigen vorstehenden Anspruch, umfassend die Stufen: Beschichten der Oberfläche mit einer Zusammensetzung, die einen auf Mangan basierenden Katalysator und ein wasserlösliches Bindemittel umfasst, und Erwärmen der beschichteten Oberfläche über einen ausreichenden Zeitraum, um die Zusammensetzung zu härten, wobei die Erwärmungsstufe aus einem Erwärmen der beschichteten Oberfläche auf ≤ 90°C besteht.

## Revendications

1. Echangeur de chaleur comprenant une surface au contact de l'atmosphère revêtue d'une composition destinée à réduire les polluants oxydants atmosphériques, laquelle composition comprend un agent réducteur comprenant un catalyseur à base de manganèse et un liant **caractérisé en ce que** le liant est soluble dans l'eau.

2. Echangeur de chaleur selon la revendication 1, dans lequel le catalyseur à base de manganèse est du MnO₂ ou un dérivé de celui-ci.

3. Echangeur de chaleur selon la revendication 2, dans lequel le dérivé de MnO₂ est la cryptomélane.

4. Echangeur de chaleur selon la revendication 1, 2 ou 3, dans lequel le liant soluble dans l'eau est un liant cellulosique.

5. Echangeur de chaleur selon la revendication 4, dans lequel le liant cellulosique est un éther ou un ester ou un liant cellulosique semi-synthétique, de préférence l'hydroxypropyl- ou la méthyl-cellulose.

6. Echangeur de chaleur selon la revendication 1, 2 ou 3, dans lequel le liant soluble dans l'eau est un liant vinyle ou acrylique, de préférence le polyalcool vinylique ou le polyméthacrylate d'ammonium.

7. Echangeur de chaleur selon l'une quelconque des revendications précédentes, comprenant en outre des particules d'un métal de transition, de préférence l'argent ou le cuivre, pour améliorer la conductivité thermique de la composition.

8. Echangeur de chaleur selon l'une quelconque des revendications précédentes, dans lequel la surface comprend de l'aluminium ou un alliage d'aluminium.

9. Echangeur de chaleur selon l'une quelconque des revendications précédentes, dans lequel l'échangeur de chaleur est un radiateur et/ou un condenseur, de préférence pour un véhicule à moteur.

10. Procédé de fabrication d'un échangeur de chaleur selon l'une quelconque des revendications précédentes, comprenant les étapes comprenant le revêtement de la surface d'une composition comprenant un catalyseur à base de manganèse et un liant soluble dans l'eau et le chauffage de la surface revêtue pendant un temps suffisant pour durcir la composition, dans lequel l'étape de chauffage consiste à chauffer la surface revêtue à ≤ 90°C.
